(19) Europäisches Patentamt
European Patent Office
Office européen des brevets

(11) **EP 4 676 020 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
*H04N 7/01* (2006.01)    *H04N 5/21* (2006.01)
*G06T 5/00* (2024.01)

(21) Application number: 24792003.6

(22) Date of filing: 16.04.2024

(86) International application number:
PCT/CN2024/088097

(87) International publication number:
WO 2024/217418 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.04.2023 CN 202310436358

(71) Applicant: Moore Threads Technology Co., Ltd.
Beijing 100036 (CN)

(72) Inventor: YANG, Bowen
Beijing 100036 (CN)

(74) Representative: Lavoix
Bayerstraße 83
80335 München (DE)

(54) **IMAGE PROCESSING METHOD AND APPARATUS, COMPUTING DEVICE, MEDIUM AND PROGRAM PRODUCT**

(57)    The embodiments of the present application relate to the field of image processing. Provided are an image processing method and apparatus, a computing device, a computer-readable storage medium and a program product. The method comprises: acquiring a first image, a first pixel being one of a plurality of pixels included in the first image; determining a second pixel in a second image according to a pixel velocity of the first pixel, the second image being an output image of the previous frame of the first image; determining a mixing ratio of a first color value and a second color value according to a velocity divergence of the first pixel, the velocity divergence being used for representing a variation of the pixel velocity flux in the neighborhood space of the first pixel; and determining a third color value according to the mixing ratio, the third color value being an output color value of the first pixel.

```
┌──────────────────────────────────────────────────────┐
│              Acquire a first image                     │──── S110
└──────────────────────────────────────────────────────┘
                          │
┌──────────────────────────────────────────────────────┐
│ Determine a second pixel in a second image according   │──── S120
│ to a pixel velocity of a first pixel                   │
└──────────────────────────────────────────────────────┘
                          │
┌──────────────────────────────────────────────────────┐
│ Determine a mixing ratio of a first color value to a   │──── S130
│ second color value according to a velocity divergence  │
│ of the first pixel                                     │
└──────────────────────────────────────────────────────┘
                          │
┌──────────────────────────────────────────────────────┐
│ Determine a third color value according to the mixing  │──── S140
│ ratio                                                  │
└──────────────────────────────────────────────────────┘
```

FIG. 1

**Description**

CROSS-REFERENCE TO RELATED APPLICATIONS

The present application is filed based on and claims priority to the Chinese Patent Application No. 202310436358.8, filed on April 21, 2023 and entitled "IMAGE PROCESSING METHOD AND APPARATUS, COMPUTING DEVICE, AND COMPUTER-READABLE STORAGE MEDIUM", the entire content of which is incorporated herein by reference.

TECHNICAL FIELD

The embodiments of the present disclosure relate to the field of image processing, and relate to an image processing method and apparatus, a computing device, a computer-readable storage medium and a program product.

BACKGROUND

Temporal anti-aliasing (TAA) is an image processing technology for eliminating jaggies appearing at the edge of an object in an image outputted by a display. A historical pixel in a previous frame of output image is acquired, and the historical pixel and a pixel of a current frame obtained by rendering are linearly mixed, and the obtained result is a pixel outputted to the display. The outputted pixel includes both historical information and information of the current frame, so that the image information can be described more accurately than the current frame, thereby reducing jaggies.

SUMMARY

The embodiments of the present disclosure provide an image processing method and apparatus, a computing device, a computer-readable storage medium, and a program product, which can determine a mixing ratio of a pixel of a current frame to a pixel of a previous frame according to a velocity divergence of the pixel, and more essentially determine a situation causing a historical failure in geometric information, thereby retaining image details as much as possible and improving an image output effect.

A first aspect of the embodiments of the present disclosure provides an image processing method, which includes following operations. A first image is acquired. The first image includes a plurality of pixels, a first pixel is one of the plurality of pixels, and a first color value is a color value of the first pixel. A second pixel is determined in a second image according to a pixel velocity of the first pixel. The second image is an output image of a frame previous to the first image, the pixel velocity represents a distance and direction of movement of an output position of the first pixel in a screen relative to an output position of the second pixel in the screen, and a second color value is a color value of the second pixel. A mixing ratio of the first color value to the second color value is determined according to a velocity divergence of the first pixel. The velocity divergence represents a variation in a flux of velocities of pixels within a neighborhood space of the first pixel, the neighborhood space is a square area composed of $K \times K$ pixels centered at the first pixel in the first image, and K is an odd number greater than 1. A third color value is determined according to the mixing ratio, and the third color value is an output color value of the first pixel.

According to a technical solution provided by the embodiments of the present disclosure, the velocity divergence as a new parameter is introduced as a reference quantity for determining whether historical information of the pixel is usable. The velocity divergence of the pixel, compared with pixel velocity, can more essentially determine whether a geometric shape around the pixel changes. Therefore, the usable information of the pixel of the previous frame can be avoided from being discarded incorrectly during the process of pixel movement, thereby retaining image details as much as possible, and improving the image output effect.

In some embodiments, the velocity divergence is related to pixel velocities of edge pixels in the neighborhood space.

According to the described technical solution, by comparing the velocities of the pixels at the edges of the neighborhood space around the pixel, the velocity divergence can determine whether the geometric shape of the neighborhood space around the pixel changes, and thus determine whether an ambient environment of the pixel is stable.

In some embodiments, the velocity divergence is determined according to the number of pixels at each side of the neighborhood space, a side length of the pixels in the first image outputted onto the screen, components in an x direction of pixel velocities of edge pixels on a left edge and a right edge of the neighborhood space, and components in a y direction of pixel velocities of edge pixels on an upper edge and a lower edge of the neighborhood space.

The velocity divergence meets:

$$div_{K \times K} \vec{v} = \sum_{i=-\frac{K-1}{2}}^{\frac{K-1}{2}} (v_x \left( x + \frac{K}{2}a, y + ia \right) - v_x \left( x - \frac{K}{2}a, y + ia \right) + v_y \left( x + ia, y + \frac{K}{2}a \right) -$$

$$v_y(x + ia, y - \frac{K}{2}a));$$

$div_{K \times K} \vec{v}$ denotes the velocity divergence, $K$ denotes the number of pixels at each side of the neighborhood space, $a$ denotes the side length of pixels in the first image outputted onto the screen, $(x, y)$ denote coordinates of the first pixel outputted on the screen, $v_x(x, y)$ denotes a component in an x direction of a pixel velocity of a pixel outputted at the coordinates $(x, y)$ of the screen, and $v_y(x, y)$ is a component in a y direction of a pixel velocity of a pixel outputted at the coordinates $(x, y)$ of the screen.

According to the described technical solution, the velocity divergence is determined by considering the variation in the velocities of the pixels within a spatial range around a target pixel, so that whether the ambient environment of a pixel having a velocity which is not zero is stable can also be determined.

In some embodiments, the method includes the following operation before the mixing ratio of the first color value to the second color value is determined according to the velocity divergence of the first pixel. An effective sample count of the second pixel and a time-domain second moment of the second pixel are acquired. The effective sample count represents the number of effective pixels mixed in the second pixel, the time-domain second moment represents a fluctuation range of color values of the effective pixels, and the effective pixels are pixels in historical frames that affect the second color value.

According to the described technical solution, the effective sample count and the time-domain second moment as two new parameters are introduced, a statistical distribution regularity of historical information included in the pixel of the previous frame in the time domain can be represented, and usable reference information is provided in more dimensions for determining whether the historical information is ineffective, thereby improving the accuracy of the determination criterion.

In some embodiments, the operation that the mixing ratio of the first color value to the second color value is determined according to the velocity divergence of the first pixel includes the following operations. A effective range of the second color value is determined according to the velocity divergence, the effective range represents a magnitude of an allowable deviation of the second color value relative to the first color value, and the mixing ratio is determined according to a relationship between the second color value and the effective range.

According to the described technical solution, the multi-dimensional reference parameters are unified as the effective range of the historical pixels for measurement, and the mixing ratio can be adjusted according to whether the value of the historical pixel actually appears within the effective range, thereby converting the reference information in different dimensions into a uniform standard.

In some embodiments, the operation that the effective range of the second color value is determined according to the velocity divergence includes an operation that if the velocity divergence is 0, the effective range is determined according to a spatial standard deviation, a time-domain standard deviation and the effective sample count of the second pixel. The spatial standard deviation is a standard deviation of color values of pixels in the neighborhood space, and the time-domain standard deviation is a standard deviation of color values of the effective pixels.

According to the described technical solution, when the velocity divergence is 0, the current pixel does not move or is in a stable translation state in which the ambient environment does not change, which conforms to the statistical distribution regularity of historical pixels in the time domain. Thus, the time-domain standard deviation can be used as one of the reference parameters for determining the effective range, and reference information in the time dimension can be provided for determining whether the historical information is ineffective.

In some embodiments, the time-domain standard deviation is calculated according to the time-domain second moment and the second color value of the second pixel.

The time-domain standard deviation meets:

$$dev_t{}^2 = M_2 - hist^2;$$

$devt$ denotes the time-domain standard deviation, $M_2$ denotes the time-domain second moment of the second pixel, and $hist$ denotes the second color value.

According to the described technical solution, an equivalent standard deviation of the historical effective pixels is calculated by using the known parameters, and an equivalent value of the statistical quantity that cannot be directly obtained by means of a statistical method can be calculated. Thus, the time-domain standard deviation is provided as a reference parameter for determining the effective range.

In some embodiments, the effective range is calculated according to the spatial standard deviation, the time-domain standard deviation, and a boundary constraint function.

The effective range meets:

$$\delta = 3 \times \left( dev_s + (dev_l - dev_s) \times clamp\left(\tfrac{N-5}{30}, 0, 1\right) \right);$$

$$clamp(x, 0, 1) = \begin{cases} 0, x \le 0 \\ x, 0 < x < 1; \\ 1, x \ge 1 \end{cases}$$

$\delta$ denotes the effective range, $dev_s$ denotes the spatial standard deviation, $dev_l$ denotes a maximum value between the spatial standard deviation and the time-domain standard deviation, $N$ denotes the effective sample count of the second pixel, and $clamp(x, 0, 1)$ represents a boundary constraint function.

According to the described technical solution, according to the described formula for calculating the effective range, the effective range can be gradually widened from the spatial standard deviation to the larger value between the time-domain standard deviation and the spatial standard deviation when the number of historical effective samples is large, thereby preventing detail loss caused when the signal at a position having a large fluctuation in the image is cut off, while also ensuring good time-domain stability and preventing the occurrence of image jitter.

In some embodiments, the operation that the effective range of the second color value is determined according to the velocity divergence includes an operation that if the velocity divergence is not 0, the effective range is determined according to a spatial standard deviation. The spatial standard deviation is a standard deviation of color values of pixels in the neighborhood space.

According to the described technical solution, the ambient environment of the current pixel changes when the velocity divergence is not 0, and the statistical distribution regularity of the historical pixels in the time domain may be not met, so that the reference parameter for the effective range can be limited to be the spatial standard deviation, and information in the time dimension is no longer referred to.

In some embodiments, the operation that the effective range of the second color value is determined according to the velocity divergence further includes: adjusting the effective range according to the velocity divergence.

According to the described technical solution, the size of the effective range is adjusted according to the extent of the change in the ambient environment of the pixel indicated by the value of the velocity divergence, so that the parameters for determining the effective range are diversified, thereby improving the accuracy of determining the effective range.

In some embodiments, the adjusted effective range is calculated according to the spatial standard deviation, the velocity divergence, and a boundary constraint function.

The adjusted effective range meets:

$$\delta = dev_s \times \left( 3 + (0.5 - 3) \times clamp(div_{K \times K}\,\vec{v}, 0, 1) \right);$$

$$clamp(x, 0, 1) = \begin{cases} 0, x \le 0 \\ x, 0 < x < 1; \\ 1, x \ge 1 \end{cases}$$

$\delta$ denotes the effective range, $dev_s$ denotes the spatial standard deviation, $div_{K \times K}\,\vec{v}$ denotes the velocity divergence, and $clamp(x, 0, 1)$ represents the boundary constraint function.

According to the described technical solution, according to the described formula for calculating the effective range, with the velocity divergence increases, that is, the ambient environment of the pixel changes greatly, the effective range gets smaller, so that the historical information is adopted and admitted more carefully.

In some embodiments, the mixing ratio includes a first mixing ratio and a second mixing ratio. The first mixing ratio is a fixed value, and the second mixing ratio is used to correct the first mixing ratio when the magnitude of the deviation of the second color value relative to the first color value exceeds the effective range. The operation that the mixing ratio is determined according to the relationship between the second color value and the effective range includes an operation that a second mixing ratio is determined according to the relationship between the second color value and the effective range; and the first mixing ratio is corrected according to the second mixing ratio, to determine the mixing ratio.

According to the described technical solution, the mixing ratio is separated according to different purposes. A part of historical information is adopted and admitted as a fixed refresh based on a portion of the mixing ratio as a base mixing ratio, and the other portion of the mixing ratio as the correction mixing ratio indicates an equivalent situation where the historical information is cut off, so that the two portions of the mixing ratio can be regulated separately, thereby improving processing accuracy.

In some embodiments, the second mixing ratio is calculated according to the first color value, the second color value and the effective range.

The second mixing ratio meets:

$$\alpha_c = \frac{max\left(0, max\left((curr-\delta)-hist, hist-(curr+\delta)\right)\right)}{|hist-curr|};$$

$\alpha_c$ denotes the second mixing ratio, *curr* denotes the first color value, *hist* denotes the second color value, and $\delta$ denotes the effective range.

According to the described technical solution, according to the above formula for calculating the second mixing ratio which indicates an equivalent situation where the historical information is cut off, the historical information can be equivalently cut off to the upper limit or the lower limit of the effective range when the historical information exceeds the effective range, thereby discarding historical information beyond the effective range.

In some embodiments, the first image is generated according to a third image, and the number of pixels of the third image is less than or equal to the number of pixels of the first image. The first pixel is generated according to a third pixel in the third image, a weight value of the first pixel represents a degree of an effect of the third pixel onto the first color value. The operation that the mixing ratio of the first color value to the second color value is determined according to the velocity divergence of the first pixel further includes an operation that if the weight value of the first pixel is 0, the second mixing ratio of the first pixel is determined according to second mixing ratios of four pixels around the first pixel in the first image.

According to the described technical solution, the second mixing ratios of the surrounding pixels are used to perform value imputation on the second mixing ratio of the pixel having the weight value of zero, the current pixel can know that the historical information has been cut off in the neighborhood of the current pixel even if the current pixel does not acquire information from the current frame, and make the same decision as the surrounding pixels, thereby preventing holes from appearing in the neighborhood where the historical information is discarded when the sampling rate is low.

In some embodiments, the method further includes operations that an effective sample count of the first pixel is determined according to the effective sample count of the second pixel and the mixing ratio, and a time-domain second moment of the first pixel is determined according to the time-domain second moment of the second pixel and the mixing ratio.

According to the described technical solution, the time-domain distribution parameter of the current frame is determined using the determined time-domain distribution parameter of the previous frame and the mixing ratio, and the equivalent value of the statistical quantity that cannot be directly obtained by a statistical method can be calculated, Therefore, the effective sample count and the time-domain standard deviation are provided for the corresponding pixel of the next frame.

In some embodiments, the effective sample count of the first pixel is calculated according to the effective sample count of the second pixel and the mixing ratio, and the time-domain second moment of the first pixel is calculated according to the time-domain second moment of the second pixel and the mixing ratio.

The effective sample count of the first pixel and the time-domain second moment of the first pixel meet:

$$\frac{1}{N'} = (1-\alpha)^2 \frac{1}{N} + \alpha^2;$$

$$M_2' = (1-\alpha) * M_2 + \alpha * curr^2;$$

$\alpha$ denotes the mixing ratio, $N'$ denotes the effective sample count of the first pixel, $N$ denotes the effective sample count of the second pixel, $M_2'$ denotes the time-domain second moment of the first pixel, $M_2$ denotes the time-domain second moment of the second pixel, and *curr* denotes the first color value.

According to the described technical solution, the equivalent value of the statistical quantity that cannot be directly obtained by the statistical method can be calculated according to the described formula for calculating the time-domain distribution parameter, so that the effective sample count and the time-domain standard deviation for the corresponding pixel of the next frame are provided.

A second aspect of the embodiments of the present disclosure provides an image processing apparatus, including an acquiring portion, a sampling portion, a determining portion and a mixing portion. The acquiring portion is configured to acquire a first image. The first image includes a plurality of pixels, a first pixel is one of the plurality of pixels, and a first color value is a color value of the first pixel. The sampling portion is configured determine a second pixel in a second image according to a pixel velocity of the first pixel. The second image is an output image of a frame previous to the first image, the pixel velocity represents a distance and direction of movement of an output position of the first pixel in a screen relative to an output position of the second pixel in the screen, and a second color value is a color value of the second pixel. The determining portion is configured to determine a mixing ratio of the first color value to the second color value according to a velocity divergence of the first pixel. The velocity divergence represents a variation in a flux of velocities of pixels within a neighborhood space of the first pixel, the neighborhood space is a square area composed of K × K pixels centered at the first pixel in the first image, and K is an odd number greater than 1. The mixing portion is configured to determine a third color value according to the mixing ratio, and the third color value is an output color value of the first pixel.

In some embodiments, the velocity divergence is related to pixel velocities of edge pixels in the neighborhood space.

In some embodiments, the velocity divergence is determined according to the number of pixels at each side of the neighborhood space, a side length of the pixels in the first image outputted onto the screen, components in an x direction of pixel velocities of edge pixels on a left edge and a right edge of the neighborhood space, and components in a y direction of pixel velocities of edge pixels on an upper edge and a lower edge of the neighborhood space.

The velocity divergence meets:

$$ div_{K \times K} \vec{v} = \sum_{i=-\frac{K-1}{2}}^{\frac{K-1}{2}} (v_x \left( x + \frac{K}{2}a, y + ia \right) - v_x \left( x - \frac{K}{2}a, y + ia \right) + v_y \left( x + ia, y + \frac{K}{2}a \right) - $$

$$ v_y(x + ia, y - \frac{K}{2}a)); $$

$div_{K \times K} \vec{v}$ denotes the velocity divergence, $K$ denotes the number of pixels at each side of the neighborhood space, a denotes the side length of the pixel in the first image outputted onto the screen, $(x, y)$ denote coordinates of the first pixel outputted on the screen, $v_x(x, y)$ denotes a component in an x direction of a pixel velocity of a pixel outputted at the coordinates $(x, y)$ of the screen, and $v_y(x, y)$ is a component in a y direction of a pixel velocity of a pixel outputted at the coordinates $(x, y)$ of the screen.

In some embodiments, before determining the mixing ratio of the first color value to the second color value according to the velocity divergence of the first pixel, the sampling portion is further configured to acquire an effective sample count of the second pixel and a time-domain second moment of the second pixel. The effective sample count represents the number of effective pixels mixed in the second pixel, the time-domain second moment represents a fluctuation range of color values of the effective pixels, and the effective pixels are pixels in a historical frame that affect the second color value.

In some embodiments, the determining portion is further configured to determine an effective range of the second color value according to the velocity divergence. The effective range represents a magnitude of an allowable deviation of the second color value relative to the first color value. The determining portion is further configured to determine the mixing ratio according to a relationship between the second color value and the effective range.

In some embodiments, the determining portion is further configured to: if the velocity divergence is 0, determine the effective range according to a spatial standard deviation, a time-domain standard deviation, and the effective sample count of the second pixel. The spatial standard deviation is a standard deviation of color values of pixels in the neighborhood space, and the time-domain standard deviation is a standard deviation of color values of the effective pixels.

In some embodiments, the time-domain standard deviation is calculated according to the time-domain second moment and the second color value of the second pixel.

The time-domain standard deviation meets:

$$ dev_t{}^2 = M_2 - hist^2; $$

$dev_t$ denotes the time-domain standard deviation, $M_2$ denotes the time-domain second moment of the second pixel, and $hist$ denotes the second color value.

In some embodiments, the effective range is calculated according to the spatial standard deviation, the time-domain standard deviation, and a boundary constraint function.

The effective range meets:

$$\delta = 3 \times \left( dev_s + (dev_l - dev_s) \times clamp\left(\tfrac{N-5}{30}, 0, 1\right) \right);$$

$$clamp(x, 0, 1) = \begin{cases} 0, & x \le 0 \\ x, & 0 < x < 1; \\ 1, & x \ge 1 \end{cases}$$

$\delta$ denotes the effective range, $dev_l$ denotes a maximum value between the spatial standard deviation and the time-domain standard deviation, N denotes the effective sample count of the second pixel, and $clamp(x, 0, 1)$ represents the boundary constraint function.

In some embodiments, the determining portion is further configured to: if the velocity divergence is not 0, determine the effective range according to a spatial standard deviation. The spatial standard deviation is a standard deviation of color values of pixels in the neighborhood space.

In some embodiments, the determining portion is further configured to adjust the effective range according to the velocity divergence.

In some embodiments, the adjusted effective range is calculated according to the spatial standard deviation, the velocity divergence, and a boundary constraint function.

The adjusted effective range meets:

$$\delta = dev_s \times \left( 3 + (0.5 - 3) \times clamp(div_{K \times K}\, \vec{v}, 0, 1) \right);$$

$$clamp(x, 0, 1) = \begin{cases} 0, & x \le 0 \\ x, & 0 < x < 1; \\ 1, & x \ge 1 \end{cases}$$

$\delta$ denotes the effective range, $dev_s$ denotes the spatial standard deviation, $div_{K \times K}\,\vec{v}$ denotes the velocity divergence, and $clamp(x, 0, 1)$ represents the boundary constraint function.

In some embodiments, the mixing ratio includes a first mixing ratio and a second mixing ratio. The first mixing ratio is a fixed value, and the second mixing ratio is used to correct the first mixing ratio when the magnitude of the deviation of the second color value relative to the first color value exceeds the effective range. The determining portion is configured to determine a second mixing ratio according to the relationship between the second color value and the effective range, and correct and the first mixing ratio according to the second mixing ratio, to determine the mixing ratio.

In some embodiments, the second mixing ratio is calculated according to the first color value, the second color value, and the effective range.

The second mixing ratio meets:

$$\alpha_c = \frac{max\left(0, max\left((curr - \delta) - hist, hist - (curr + \delta)\right)\right)}{|hist - curr|};$$

$\alpha_c$ denotes the second mixing ratio, $curr$ denotes the first color value, $hist$ denotes the second color value, and $\delta$ denotes the effective range.

In some embodiments, the first image is generated according to a third image, and the number of pixels in the third image is less than or equal to the number of pixels in the first image. The first pixel is generated according to a third pixel in the third image, a weight value of the first pixel represents a degree of an affect of the third pixel to the first color value. The determining portion is configured to if the weight value of the first pixel is 0, determine the second mixing ratio of the first pixel according to second mixing ratios of four pixels around the first pixel in the first image.

In some embodiments, the mixing portion is further configured to: generate an effective sample count of the first pixel according to the effective sample count of the second pixel and the mixing ratio, and generate the time-domain second moment of the first pixel according to the time-domain second moment of the second pixel and the mixing ratio.

In some embodiments, the effective sample count of the first pixel is calculated according to the effective sample count of the second pixel and the mixing ratio, and the time-domain second moment of the first pixel is calculated according to the time-domain second moment of the second pixel and the mixing ratio.

The effective sample count of the first pixel and the time-domain second moment of the first pixel meet:

$$\frac{1}{N'} = (1 - \alpha)^2 \frac{1}{N} + \alpha^2;$$

$$M_2' = (1 - \alpha) * M_2 + \alpha * curr^2;$$

$\alpha$ denotes the mixing ratio, $N'$ denotes the effective sample count of the first pixel, $N$ denotes the effective sample count of the second pixel, $M_2'$ denotes the time-domain second moment of the first pixel, $M_2$ denotes the time-domain second moment of the second pixel, and *curr* denotes the first color value.

A third aspect of the embodiments of the present disclosure provides a computing device including a processor and a memory. The processor is configured to execute an instruction stored in the memory, and the computing device executes the method in the first aspect or any possible implementation of the first aspect.

The processor may be a general-purpose processor, and may be implemented by hardware or software. When implemented by hardware, the processor may be a logic circuit, an integrated circuit, or the like. When implemented by software, the processor may be a general-purpose processor, and is implemented by reading software codes stored in a memory, and the memory may be integrated into the processor, or may exist independently outside the processor.

A fourth aspect of the embodiments of the present disclosure provides a chip. The chip is configured to obtain an instruction and execute the instruction to implement the operations in the method in the first aspect or any possible implementation of the first aspect.

In some embodiments, the chip includes a processor and a data interface. The processor reads, via the data interface, an instruction stored in a memory, to execute the operations in the method in the first aspect or any possible implementation of the first aspect.

In some embodiments, the chip may further include a memory having an instruction stored thereon, and the processor is configured to execute the instruction stored in the memory. When the instruction is executed, the processor is configured to execute the operations in the method in the first aspect or any possible implementation of the first aspect.

A fifth aspect of the embodiments of the present disclosure provides a computer program product including a computer program or instruction. The computer program or instruction, when executed, implements the operations in the method in the first aspect or any possible implementation of the first aspect.

A sixth aspect of the embodiments of the present disclosure provides a computer-readable storage medium having a computer program stored thereon. The computer program when executed by a processor, implements the operations in the method in the first aspect or any possible implementation of the first aspect.

As an example, these computer-readable storage media include, but are not limited to, one or more of: a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, a compact disc, or a Compact Disc Read-Only Memory (CD-ROM) and a hard drive.

Optionally, in some embodiments, the above computer-readable storage medium may be a non-volatile storage medium.

It should be understood that the previous general description and the following detailed description are merely exemplary and illustrative, and do not limit the present disclosure.

BRIEF DESCRIPTION OF THE DRAWINGS

In order to describe the technical solutions in the embodiments of the present disclosure more clearly, the accompanying drawings to be used in the embodiments of the present disclosure is described below.

The accompanying drawings here are incorporated into the specification, and constitute a portion of the specification. The accompanying drawings illustrate embodiments conforming with the present disclosure, and are used along with the specification to describe the technical solutions of the present disclosure.

FIG. 1 is a schematic flowchart of an image processing method provided by the embodiments of the present disclosure.

FIG. 2 is a schematic flowchart of another image processing method provided by the embodiments of the present disclosure.

FIG. 3 is a schematic structural block diagram of an image processing apparatus provided by the embodiments of the present disclosure.

FIG. 4 is a schematic structural block diagram of a computing device provided by the embodiments of the present disclosure.

DETAILED DESCRIPTION

The technical solutions in the embodiments of the present disclosure will be described below with reference to the accompanying drawings.

In the embodiments of the present disclosure, various aspects, embodiments, or features are presented by a system including a plurality of devices, components, portions, or the like. It is to be understood and appreciated that the various systems may include additional devices, components, portions, etc. and/or may not include all of the devices, components, portions, etc. discussed with reference to the accompanying drawings. Further, a combination of these solutions may also be used.

In addition, in the embodiments of the present disclosure, words such as "exemplary" or "for example" are used as examples, instances, or illustrations. Any embodiment or design solution described as "example" in the present disclosure should not be construed as being preferred or advantageous over other embodiments or design solutions. Rather, the word "example" is intended to present concepts in a specific manner.

In the embodiments of the present disclosure, the words "corresponding, relevant" and "corresponding" may be sometimes used interchangeably, and it should be noted that when a difference therebetween is not emphasized, the words have the same meanings to be expressed.

The network architecture and service scenarios described in the embodiments of the present disclosure are intended to more clearly illustrate the technical solutions of the embodiments of the present disclosure, and do not constitute limitations to the technical solutions provided by the embodiments of the present disclosure. Those of ordinary skill in the art could appreciate that, with the evolution of network architecture and the emergence of new service scenarios, the technical solutions provided by the embodiments of the present disclosure are also applicable for similar technical problems.

Reference to "one embodiment" or "some embodiments" or the like described in this specification means that one or more embodiments of the present disclosure include a specific feature, structure, or characteristic described with reference to the embodiment. Therefore, the phrases "in one embodiment", "in some embodiments", "in some other embodiments", "in yet other embodiments" and the like appearing in different places of this specification do not necessarily mean referring to the same embodiment, but mean "one or more but not all embodiments", unless specifically emphasized otherwise. The terms "comprise", "include", "have" and their variants all mean "including but are not limited to", unless specifically emphasized otherwise.

In the embodiments of the present disclosure, "at least one" means one or more, and "a plurality of" means two or more. "And/or" describes an association relationship between associated objects, indicating that there may be three relationships. For example, A and/or B may indicate A existing alone, A and B existing simultaneously, or B existing alone, A and B may be singular or multiple. The character "/" generally indicates that the associated objects before and after this character are in an "or" relationship. "At least one of the following items (pieces)" or a similar expression thereof refers to any combination of these items, including any combination of a singular item or multiple items. For example, at least one of a, b, or c may indicate: a, b, c, a and b, a and c, b and c, or a and b and c. a, b, and c may be singular or multiple.

For ease of understanding, related terms and concepts that may be used in the embodiments of the present disclosure will be first introduced below.

1. Anti-aliasing (AA)

The anti-aliasing technology is a technology for eliminating jaggies that appear at the edge of an object in an image outputted by a display, and may also be referred to as anti-aliasing, edge softening, aliasing elimination, lossy anti-folding of images, or the like. A source signal or continuous analog signal at a high resolution can store more data. When undergoing sampling, more data is replaced with fewer data points, and the sampling result is lossy since some data is ignored. When a machine converts a sampled digital signal into a human-recognizable analog signal, the sampled digital signal is overlapped and lossy, which may cause a harsh, disharmonious tone or noise appearing in the sound.

In 3D graphics, each graph includes pixels, and each instantaneous image includes frames. Because pixels on a screen are limited, a position of a polygon cannot be represented by using an absolute coordinate positioning method due to technical limitations, and the polygon can be positioned relatively by sampling at an approximate position. Since there are not enough samples to represent graphs of all objects in a 3D world, lossy phenomena such as waves, circles, jaggies, and flickering occurs at the edges of transitions between the objects in the displayed image, which seriously affects the quality of the image.

2. Super sampling anti-aliasing (SSAA).

The SSAA is an early post-processing anti-aliasing technology, which increases the current resolution of an image by multiples (for example, the current resolution is 1024 × 768, and after 2 times of SSAA, the image is enlarged to 2048 × 1536), and then scales the image into a current display. The resolution is increased without changing the display size, and the single pixel gets smaller, thereby reducing the jaggedness of the image.

The general process of the SSAA is described as follows. First, an image is created into a separate buffer, the buffer has an image resolution higher than a screen resolution. After the number of pixels is doubled, 2 or 4 neighboring pixels are selected for mixing, so that the generated pixel has the characteristics of the neighboring pixels. Thus, a transition color between pixels becomes more similar, and the color transition of the entire image tends to be smooth. The processed pixels are outputted to a frame buffer, and stored as an image, and displayed on a display as a current frame.

It can be seen that the processing concept of the SSAA is relatively simple and direct. Therefore, although the effect is good, more resources need to be consumed and the processing speed is low since sampling is performed multiple times for each pixel.

3. Temporal anti-aliasing (TAA)

The principle of the TAA is substantially the same as that of the SSAA, where each pixel point corresponds to a plurality of sampling points. However, unlike the SSAA where multiple sampling is performed in the same frame, anti-aliasing is implemented in the TAA by synthesizing data of the corresponding pixel in historical frames, so that multiple samples of each pixel point are equally distributed to a plurality of frames, thereby reducing resource overhead.

The general process of the TAA is described as follows. Before rendering, a small perturbation is provided to the entire image to ensure that different information can be obtained for the frames. The perturbation is less than one pixel and is pseudo-random, and is usually added to a transformation matrix as a translation vector. When the image is rendered, a pixel velocity of each pixel is outputted and recorded in a map. The pixel velocity is defined by subtracting a screen position of a vertex in a previous frame from the screen position of the vertex in this frame. According to the pixel velocity, the historical frame is traced back to obtain the historical position of the pixel, and a sample corresponding to the historical position is historical information of the pixel. After the historical pixel is linearly mixed with the pixel of the current frame, the obtained result is a pixel that is outputted. The outputted pixel includes both historical information and current frame information, so that the image information can be described more accurately than the current frame, thereby reducing jaggies. The mixed pixel is outputted to a display device and recorded as historical information of a next frame.

4. Temporal super-sampling (TSS)

The TSS technology is a variant of the TAA technology, and also combines the ideas of the SSAA. The difference between the TSS technology and the TAA technology is that the object processed in the TSS technology is an image generated by rendering at low resolution, and both the historical information and the output image are high-resolution images. Therefore, in the TSS technology, a low-resolution image is up-sampled by filtering, to obtain a high-resolution image as a current frame, so that the current frame has the same resolution as a historical frame and target output. Therefore, the pixel of the current frame is mixed with the corresponding pixel in the historical frame to obtain the pixel to be output.

When the high-resolution image is acquired in the TSS, the sampling points cannot cover all pixels in the high-resolution image. Therefore, the current frame and the historical information are selectively mixed. The sampling position of the current frame is determined by the perturbation, and the current frame is adopted and admitted based on the distance between the pixel and the sampling position. A collection degree of the current frame is indicated by a weight value of a pixel in the high-resolution image, and the weight value of the pixel may also be referred to as a confidence degree of the pixel represented as conf. For example, if the sampling position of the current frame is far away from the pixel and fails to fall within a grid at which the pixel is located, the weight value of the pixel is 0, the information of the current frame is not mixed, and the output pixel is obtained by the historical information.

However, the historical information may be ineffective due to some conditions (for example, a change in illumination, reflection or shadow, a change in the mask relationship between objects, or the like). When the historical information has become ineffective, the historical information should be discarded, and only the information of the current frame is collected, otherwise wrong content will appear in the image.

At present, the criteria for determining whether historical information is usable is relatively rough, which causes a lot of usable historical information to be discarded, and results in a poor effect of the anti-aliasing processing. Therefore, how to retain usable historical frame information as much as possible when processing the current frame image has become a technical problem urgently to be solved.

However, both TAA and TSS techniques face the problem that the historical information may be outdated. For example, when the historical information becomes ineffective due to a change in illumination, reflection or shadow, a change in the mask relationship between objects, or the like, the historical information should be discarded, and only the information of the current frame is adopted and admitted. Incorrect content will appear in the image otherwise. For example, when the mask relationship between objects changes, if the historical information is not discarded in time, the foreground occluding object will leave an afterimage on the background occluded object in the next frame. For another example, when the illumination condition of the object changes, the reflection and the projection on the surface of the object will lag behind what they should actually be since unusable historical information is adopted and admitted.

In order to prevent an error from occurring in the image caused by the ineffective historical information, a careful standard is generally used in a current solution for selecting historical information that can be adopted and admitted, and the standard only considers the single dimension.

For example, color values of nine pixels within a spatial range of $3 \times 3$ around the target pixel are used as a reference standard, and historical information exceeding a maximum or minimum value range is discarded.

For another example, the expectation and variance of the color values of 9 pixels within the spatial range of $3 \times 3$ around the target pixel are used as reference standards, and only historical information that can only appear within several variances around the expectation is adopted and admitted. If historical information exceeds the range, the historical information is cut off to an upper/lower limit. Meanwhile, whether the pixel moves is used as a basis for adjusting the range. For a pixel with a motion velocity, the range is 0.5 standard deviations. For a pixel with a motion velocity of 0, the range is 2.5 standard deviations.

The described solution can reduce the interference of ineffective historical information to a certain extent, but a lot of usable historical information which has not become ineffective may be discarded. For example, in a solution where the expectation and the standard deviation within the spatial range are used as the standard, fine details in the image may be discarded incorrectly due to large signal fluctuations and many outliers, which may result in undesirable consequences that the details are blurred, and the edges are jagged due to insufficient sampling. For another example, the pixel velocity is used as the basis of the adjustment range, and in a scenario where the object is translating and the mask relationship does not change, more historical information is discarded due to the velocity of the pixel. However, since the ambient environment of the target pixel is stable and unchanged, the historical information is actually not ineffective, and the described determination basis causes the original usable historical information to be discarded, and the effect of the anti-aliasing processing becomes worse.

In view of this, the embodiments of the present disclosure provide an image processing method, which provides a historical information determination criterion that is precise and has many reference dimensions, and provides effective samples in the time domain, thereby obtaining an output image having high quality and good temporal stability. The velocity divergence of the pixel as a new parameter is proposed in the method according to the embodiments of the present disclosure, and the method can determine the mixing ratio of the pixel of the current frame and the pixel of the previous frame according to the velocity divergence of the pixel, so that a situation causing a historical failure in geometric information is determined essentially, thereby retaining image details as much as possible, and improving the image output effect.

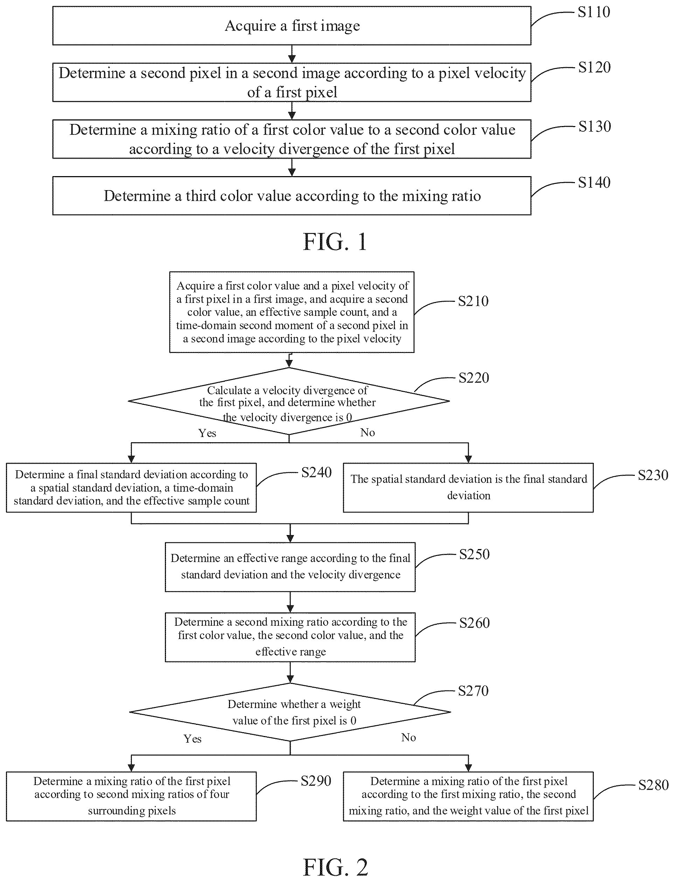

To better understand the solutions in the embodiments of the present disclosure, the method provided by the embodiments of the present disclosure will be described below with reference to FIG. 1.

FIG. 1 shows a schematic flowchart of an image processing method provided by the embodiments of the present disclosure. As shown in FIG. 1, the method includes the following operations S110 to S140.

At S110, a first image is acquired.

For example, in operation S110, a computing device may acquire a current frame image. Specifically, the current frame image has the same resolution as historical information and a display device for outputting. The historical information is an image of a historical frame outputted to the display device. For ease of illustration, the acquired current frame image is referred to as a first image, a previous frame image outputted to the display device is referred to as a second image, and the first image and the second image have the same number of pixels. In some embodiments, the color of a pixel is described by a color value, a first pixel is one of a plurality of pixels in the first image, and a first color value is the color value of the first pixel.

In some embodiments, the first image may be obtained by raising the resolution of an image which rendered at a low resolution via up-sampling. The up-sampling includes, but is not limited to, Lanczos sampling, Monte Carlo sampling, etc., which is not limited in the embodiments of the present disclosure. Using Lanczos2 filtering up-sampling as an example, the image rendered at the low resolution is converted into the first image with a high resolution by means of Lanczos2 filtering up-sampling, each pixel in the first image has a Lanczos2 weight according to a distance of the pixel from each of sampling points, and the maximum value among the Lanczos2 weights of the pixel is denoted as a confidence degree (conf), which may also be referred to as a weight value of the pixel, to represent the degree of an affect of the pixel of the image in the low resolution to the pixel of the image in the high resolution.

It should be understood that the above operation that the image in the high resolution is acquired by increasing the number of pixels of the image in the low resolution is merely one manner of acquiring the first image, and the first image is not limited to be acquired by up-sampling in the embodiments of the present disclosure. The first image may also be acquired without changing the resolution. For example, the first image may be generated by rendering at a high resolution. For another example, the computing device may first generate an image by rendering at a high resolution (which is the same as that of a display device for outputting), and then processes the image without changing the resolution to acquire the first image, which is not limited in the embodiments of the present disclosure. In the above case, information of each pixel in the first image has acquired from the current frame, and thus has a weight value of 1.

At S120, a second pixel is determined in a second image according to a pixel velocity of the first pixel.

For example, in operation S120, for each pixel in the first image, the computing device may track back in the second image to find a pixel corresponding to the pixel in the first image according to the velocity of the pixel. As described above, the second image is a previous frame image outputted to the display device, and the pixel velocity represents a distance and direction of movement of a position of a geometric shape represented by a pixel in the current frame on a screen relative to a position of a pixel corresponding to the geometric shape in the previous frame on the screen. A pixel determined by tracing back in the second image according to the pixel velocity of the first pixel is referred to as a second pixel, and the color value of the second pixel is referred to as a second color value. The pixel velocity of the first pixel may be determined when rendering and generating the current frame of image. For example, the pixel velocity of the first pixel is generated by subtracting from a position of a vertex of a geometric shape represented by the first pixel in the current frame on the screen, the position of the vertex in the previous frame on the screen, and the position on the screen may be calculated by multiplying a coordinate position of the vertex by a transformation matrix when the frame is rendered.

Since the second image is the previous frame of image outputted to the display device, that is, the second image is actually generated by mixing an image generated by rendering the previous frame with information in historical frames, the second pixel includes information of pixels corresponding to the second pixel in a series of historical frames in a time domain sequence. Therefore, two new parameters including an effective sample count N and a time-domain second moment $M_2$ are introduced, to represent the statistical distribution regularity of the historical information included in the pixel of the previous frame in the time domain. The effective sample count $N$ represents the number of effective pixels mixed in the second pixel, the time-domain second moment $M_2$ represents a fluctuation range of color values of the effective pixels, and the effective pixels are pixels in historical frames that affect the second color value.

After the second pixel is determined by backtracking based on the pixel velocity, the computing device may further obtain the effective sample count and the time-domain second moment of the second pixel. For example, after the second image is generated and outputted to the display device, the computing device may record the color value of the second pixel, the effective sample count and the time-domain second moment corresponding to the second pixel or other information in the memory, so that the second color value, and the effective sample count and the time-domain second moment of the second pixel can be obtained from the memory when processing the first image.

Since the pixels outputted to the display device are all generated by mixing the current pixels and the historical pixels at a mixing ratio, the real values of the effective sample count and the time-domain second moment cannot be obtained with a statistical method, but the equivalent values of the effective sample count and the time-domain second moment of the current frame can be calculated according to the effective sample count and the time-domain second moment of the previous frame and the mixing ratio of the current frame and the previous frame.

In case that reference may be made to information of the previous frame, the effective sample count of a pixel in the current frame may be determined according to Formula (1):

$$\frac{1}{N'} = (1 - \alpha)^2 \frac{1}{N} + \alpha^2 \qquad \text{Formula (1);}$$

The time-domain second moment of the pixel of the current frame may be determined according to Formula (2):

$$M_2' = (1 - \alpha) * M_2 + \alpha * curr^2 \qquad \text{Formula (2);}$$

$\alpha$ denotes a mixing ratio of the pixel of the current frame to an output pixel of the previous frame, $N'$ denotes the effective sample count of the pixel in the current frame, $N$ denotes an effective sample count of output pixels in the previous frame, $M_2'$ denotes the time-domain second moment of the pixel in the current frame, $M_2$ denotes the time-domain second moment of the output pixel in the previous frame, and *curr* denotes the color value of the pixel of the current frame.

In case that there is no information of the previous frame for reference, for example, in case that the current frame is an initial frame, the effective sample count and the time-domain second moment of the pixel in the current frame are initial values. In this case, the effective sample count and the time-domain second moment are both 0.

At S130, a mixing ratio of a first color value to a second color value is determined according to a velocity divergence of the first pixel.

For example, in operation S130, the computing device may determine a mixing ratio $\alpha$ of the first pixel to the second pixel in the previous frame of output image according to the velocity divergence of the first pixel in the current frame. A color value determined by mixing the first color value of the first pixel and the second color value of the second pixel at the mixing ratio $\alpha$ is used as the color value of a pixel in the current frame outputted to the display device.

The velocity divergence of the first pixel is determined according to pixel velocities of edge pixels within a neighborhood space of the first pixel. The neighborhood space is a square area formed by K × K pixels centered on the first pixel in the first image, K is an odd number greater than 1, and the edge pixels are pixels at the outermost periphery in the neighborhood space. Using a neighborhood space with the size of K × K as an example, pixels located in the first column, the Kth column, the first row, and the Kth row in the neighborhood space are edge pixels, the pixels in the first column are left-edge pixels, the pixels in the Kth column are right-edge pixels, the pixels in the first row are upper-edge pixels, and the pixels in the Kth row are lower-edge pixels. The velocity divergence of the first pixel is calculated according to a difference in an x direction between pixel velocities of the right-edge pixels and the left-edge pixels in the neighborhood space and a difference in a y direction between pixel velocities of the upper-edge pixels and the lower-edge pixels in the neighborhood space.

The velocity divergence of the first pixel may be defined according to Formula (3):

$$div_{K \times K} \, \vec{v} = \sum_{i=-\frac{K-1}{2}}^{\frac{K-1}{2}} (v_x\left(x + \frac{K}{2}a, y + ia\right) - v_x\left(x - \frac{K}{2}a, y + ia\right) + v_y\left(x + ia, y + \frac{K}{2}a\right) - $$

$$v_y(x + ia, y - \frac{K}{2}a)) \qquad\qquad \text{Formula (3);}$$

$div_{K \times K} \, \vec{v}$ denotes the velocity divergence within the neighborhood space of K × K of the first pixel, the neighborhood space is a square area composed of pixels centered on the first pixel in the first image, K denotes the number of pixels on each side of the neighborhood space, and K denotes an odd number greater than 1, a denotes a side length of pixels in the first image outputted to the screen, (x, y) denotes the coordinates of the first pixel outputted onto the screen, $v_x(x, y)$ denotes a component in the x direction of a pixel velocity of a pixel outputted at the coordinates (x, y) of the screen; and $v_y(x, y)$ denotes a component in the y direction of a pixel velocity of a pixel outputted at the coordinates (x, y) of the screen.

In some embodiments, the size K of the neighborhood space may be adjusted according to a requirement of an actual determination criterion, and a neighborhood space with K equal to 5 may be selected.

In some embodiments, the computing device may adjust an effective range of the historical information according to the velocity divergence, and thus regulates the mixing ratio according to whether the historical information falls within the effective range. For example, in case that the velocity divergence is 0, pixels in the neighborhood space have no velocity difference, and the pixels in the neighborhood space are static or move at the same velocity. Therefore, the ambient environment of the pixel in the current frame does not change drastically relative to the previous frame, and a large effective range can be given, so that more historical information falls within the effective range, and a mixing ratio biased to historical information may be obtained. For another example, in case that the velocity divergence is not 0, pixels in the neighborhood space move relatively, and the ambient environment of the pixels in the current frame may have changed relative to the previous frame. Therefore, more historical information is discarded by reducing the effective range, and a mixing ratio biased to the pixel in the current frame is obtained.

At S140, a third color value is determined according to the mixing ratio.

For example, in operation S140, the computing device may mix the first color value of the first pixel with the second color value of the second pixel at the mixing ratio $\alpha$ of the pixel of the current frame to the historical information determined in operation S130, to determine the color value of the pixel outputted to the display device in the current frame. The computing device may further store information about the mixed color value of the pixel in the memory as historical information of the next frame.

The color value of the output pixel in the current frame may be determined according to Formula (4):

$$(1 - \alpha) * hist + \alpha * curr \qquad\qquad \text{Formula (4);}$$

$\alpha$ denotes the mixing ratio of the current frame to the historical information, *curr* denotes the first color value of the first pixel, and *hist* denotes the second color value of the second pixel.

In some embodiments, the computing device may further generate an effective sample count N' and a time-domain second moment $M_2'$ of the first pixel in the current frame according to the above mixing ratio and store them in the memory, which provide reference information for the next frame. A manner of calculating the effective sample count N' of the first pixel conforms to Formula (5):

$$\frac{1}{N'} = (1 - \alpha)^2 \frac{1}{N} + \alpha^2 \qquad\qquad \text{Formula (5);}$$

A manner of calculating the time-domain second moment $M_2'$ of the first pixel conforms to Formula (6):

$$M_2' = (1 - \alpha) * M_2 + \alpha * curr^2 \qquad \text{Formula (6);}$$

$\alpha$ denotes the mixing ratio, $N'$ denotes the effective sample count of the first pixel, $N$ denotes the effective sample count of the second pixel, $M_2'$ denotes the time-domain second moment of the first pixel, $M_2$ denotes the time-domain second moment of the second pixel, and *curr* denotes the first color value.

With the technical solutions of the embodiments of the present disclosure, the velocity divergence as a new parameter is introduced as a reference quantity for determining whether historical information of the pixel is effective. Compared with pixel velocity, the velocity divergence of the pixel can more essentially represent whether the geometric shape around the pixel has changed, thereby preventing usable information of the pixel of the previous frame from being discarded incorrectly during the movement process of the pixel, and retaining image detail as much as possible, and improving the output effect of images.

In the above operation S130, in order to further refine the criterion of determining the effective range, a parameter (e.g., the effective sample count $N$ and the time-domain second moment $M_2$ as described above) representing the statistical distribution regularity of the historical information in the time domain may be introduced in some embodiments when a certain condition is met. Therefore, usable reference information is provided in more dimensions to determine whether the historical information is ineffective, thereby improving the accuracy of the determination criterion.

In this case, FIG. 2 shows a schematic flowchart of another image processing method provided by the embodiments of the present disclosure. The method of calculating the mixing ratio $\alpha$ will be described in detail below with reference to FIG. 2 and specific embodiments.

At S210, a first color value and a pixel velocity of a first pixel in a first image are acquired, and a second color value, an effective sample count and a time-domain second moment of a second pixel in a second image are acquired according to the pixel velocity.

As shown in FIG. 2, a computing device first acquires the first color value and the pixel velocity of the first pixel in the first image, and then acquires the second color value, the effective sample count and the time-domain second moment of the second pixel in the second image according to the pixel velocity, and calculates a velocity divergence of the first pixel. The first image is a current frame of image to be processed, and the second image is a previous frame of image outputted to a display device. For a specific implementation of the foregoing operations, reference may be made to related descriptions of foregoing operations S110 to S310.

At S220, a velocity divergence of the first pixel is calculated, and whether the velocity divergence is 0 is determined.

The computing device may select different final standard deviations according to whether the velocity divergence of the first pixel is 0.

In some embodiments, operation 230 is executed in case that the velocity divergence is not 0, and operation 240 is executed in the case that the velocity divergence is 0.

At S230, a spatial standard deviation is selected as a final standard deviation.

For example, in case that the velocity divergence is not 0, the spatial standard deviation $dev_s$ is selected as the final standard deviation $dev$. The spatial standard deviation $dev_s$ is a standard deviation (i.e., a square root of variance) of color values of pixels within the neighborhood space of the first pixel. In this case, the ambient environment of the current pixel has changed, and the current pixel may no longer conform to the statistical distribution regularity of the historical pixels in the time domain, so that the reference parameter for the effective range can be limited to be the spatial standard deviation without reference to the information in the time dimension.

At S240, a final standard deviation is determined according to the spatial standard deviation, a time-domain standard deviation, and the effective sample count.

For example, in case that the velocity divergence is 0, the final standard deviation $dev$ is determined according to the spatial standard deviation $dev_s$, the time-domain standard deviation $dev_t$ and the effective sample count $N$ of the second pixel. The time-domain standard deviation $dev_t$ is a standard deviation of the color values of the effective pixels mixed in the second pixel. The time-domain second moment $M_2$ is an equivalent value of the second moments of the effective pixels mixed in the second pixel, and the second color value *hist* of the second pixel obtained by mixing the color values of the effective pixels based on weights is equivalent to an average value of the color values of the effective pixels. Therefore, the following Formula (7) can be obtained:

$$dev_t{}^2 = M_2 - hist^2 \qquad \text{Formula (7);}$$

$dev_t$ denotes the time-domain standard deviation, $M_2$ denotes the time-domain second moment of the second pixel, and *hist* denotes the second color value.

The final standard deviation $dev$ can be determined according to the effective sample count $N$. With the effective sample count increases, the final standard deviation *dev* tends to be assigned by the larger value $den_l$ between the spatial standard deviation $dev_s$ and the time-domain standard deviation $dev_t$. With the effective sample count decreases, the final standard deviation *dev* tends to be assigned by the spatial standard deviation $dev_s$. The final standard deviation *dev* can be determined according to formula (8):

$$dev = lerp\left(dev_s, dev_l, clamp\left(\tfrac{N-5}{30}, 0, 1\right)\right) \qquad \text{Formula (8)};$$

*dev* denotes the final standard deviation, $dev_s$ denotes the spatial standard deviation, $den_l$ denotes the larger value between the spatial standard deviation $dev_s$ and the time-domain standard deviation $dev_t$, and *N* denotes the effective sample count of the second pixel.

*clamp*(*x*, 0,1) represents a boundary constraint function, which is defined according to Formula (9):

$$clamp(x, 0, 1) = \begin{cases} 0, x \le 0 \\ x, 0 < x < 1 \\ 1, x \ge 1 \end{cases} \qquad \text{Formula (9)};$$

*lerp*($x_1$, $x_2$, *weight*) represents a linear interpolation function, which is defined according to Formula (10):

$$lerp(x_1, x_2, weight) = x_1 + (x_2 - x_1) \times weight \qquad \text{Formula (10)};$$

In this case, when the number of historical effective samples is large, the effective range can be gradually widened from the spatial standard deviation to the larger value between the time-domain standard deviation and the spatial standard deviation, thereby preventing detail loss since the signal at a position having a large fluctuation in the image is cut off, while ensuring good temporal stability and preventing the occurrence of image jitter.

At S250, an effective range is determined according to the final standard deviation and the velocity divergence.

The computing device may adjust the number *amp* of final standard deviations in the effective range according to the value of the velocity divergence. For example, the number *amp* of final standard deviations may fluctuate within a range from 0.5 to 3. The number *amp* of final standard deviations decreases with the velocity divergence increases, and the number *amp* of final standard deviations increases with the velocity divergence decreases. The number *amp* can be determined according to Formula (11):

$$amp = lerp\left(3, 0.5, clamp(div_{K \times K}\, \vec{v}, 0, 1)\right) \qquad \text{Formula (11)};$$

$div_{K \times K}\, \vec{v}$ denotes the velocity divergence of the first pixel. In this case, the velocity divergence is large, that is, the ambient environment of the pixel changes greatly, the effective range gradually becomes smaller. Thus, the historical information is adopted and admitted carefully.

The effective range $\delta$ of the second color value is determined according to the final standard deviation *dev* and the number *amp* of final standard deviations by referring to Formula (12):

$$\delta = dev \times amp \qquad \text{Formula (12)};$$

Therefore, in case that the velocity divergence is 0, *amp* is the maximum value of 3, and the effective range $\delta$ may be determined according to the spatial standard deviation $dev_s$, the time-domain standard deviation $dev_t$, and the effective sample count *N* of the second pixel by referring to Formula (13):

$$\delta = 3 \times \left(dev_s + (dev_l - dev_s) \times clamp\left(\tfrac{N-5}{30}, 0, 1\right)\right) \qquad \text{Formula (13)};$$

In case that the velocity divergence is 0, the effective range $\delta$ may be determined according to the spatial standard deviation $dev_s$ and the velocity divergence $div_{K \times K}\, \vec{v}$ by referring to Formula (14):

$$\delta = dev_s \times \left(3 + (0.5 - 3) \times clamp(div_{K \times K}\, \vec{v}, 0, 1)\right) \qquad \text{Formula (14)};$$

The computing device can determine, according to the effective range $\delta$ and the first color value *curr,* an upper limit *ub* at which the second color value *hist* can be adopted and admitted by referring to Formula (15):

$$ub = curr + \delta \qquad \text{Formula (15);}$$

The computing device can determine, according to the effective range $\delta$ and the first color value *curr,* a lower limit *lb* at which the second color value *hist* can be adopted and admitted by referring to Formula (16):

$$lb = curr - \delta \qquad \text{Formula (16);}$$

The computing device can determine the mixing ratio $\alpha$ of the first color value to the second color value according to whether the second color value *hist* exceeds the upper limit *ub* or the lower limit *lb.*

In some embodiments, the mixing ratio $\alpha$ includes a first mixing ratio $\alpha_b$ and a second mixing ratio $\alpha_c$. The first mixing ratio $\alpha_b$ may also be referred to as a base mix ratio. $\alpha_b$ is a fixed value, and is used as a fixed refresh to adopt and admit partial historical information. The value of $\alpha_b$ may be 0.0625. The second mixing ratio $\alpha_c$ may also referred to as a correction mixing ratio, and is used to correct the first mixing ratio in case that the magnitude of a deviation of the second color value from the first color value exceeds the effective range, thereby representing a situation equivalent to the historical information being cut off.

At S260, the second mixing ratio is determined according to the first color value, the second color value, and the effective range.

A relationship of the second mixing ratio $\alpha_c$ with the first color value *curr,* the second color value *hist* and the effective range $\delta$ may be determined according to Formula (17):

$$\alpha_c = \frac{max\Big(0, max\big((curr-\delta)-hist, hist-(curr+\delta)\big)\Big)}{|hist-curr|} \qquad \text{Formula (17);}$$

In case that the second color value *hist* falls within the effective range, the second mixing ratio $\alpha_c$ is 0, which indicates that correction is not necessary. In case that the second color value *hist* exceeds the upper limit *ub* or the lower limit *lb,* that is, the deviation is large, $\alpha_c$ become large, so that the mixing result is inclined to be the first color value *curr.*

At S270, whether a weight value of the first pixel is 0 is determined.

In some embodiments, the first image may be generated by up-sampling an image at the low resolution, the weight value (confidence) *conf* of the first pixel may be equal to 0, and the current pixel does not acquire information from the current frame.

For this case, the computing device may determine different mixing ratios $\alpha$ by determining whether the weight value *conf* is equal to 0.

In some embodiments, operation 280 is executed in case that the weight value *conf* is not 0, and operation 290 is executed in case that the weight value *conf* is 0.

At S280, a mixing ratio of the first pixel is determined according to the first mixing ratio, the second mixing ratio, and the weight value of the first pixel.

For example, in case that the weight value *conf* is not 0, the first pixel acquires information from the current frame, and whether the historical information needs to be cut off can be accurately determined. Therefore, the mixing ratio $\alpha$ is determined according to the first mixing ratio $\alpha_b$, the second mixing ratio $\alpha_c$, and the weight value *conf* of the first pixel by referring to Formula (18):

$$\alpha = \alpha_b \times conf + \alpha_c \qquad \text{Formula (18);}$$

At S290, a mixing ratio of the first pixel is determined according to second mixing ratios of four surrounding pixels.

For example, in case that the weight value *conf* is 0, the first pixel does not acquire information from the current frame. In this case, the mixing ratio of the first pixel is corrected according to whether historical information of four surrounding pixels around the first pixel is cut off. In this case, the second mixing ratio $\alpha_c$ of the first pixel is determined by performing weighted averaging on the second mixing ratios of four surrounding pixels around the first pixel, and weights of the weighted averaging is weight values *conf* of the four pixels described above. Since the weight value *conf* of the first pixel is 0, the second mixing ratio $\alpha_c$ determined according to the surrounding four pixels is the mixing ratio $\alpha$ of the first pixel according to the formula described above.

According to the technical solutions of the embodiments of the present disclosure, the second mixing ratios of the surrounding pixels are used to perform value imputation on the second mixing ratio of the pixel having the weight value of zero, the current pixel can know the historical information has been cut off at the neighborhood of the current pixel even if information of the current pixel is not obtained from the current frame, and the current pixel can make the same decision as the neighboring pixels, thereby preventing holes from appearing in the neighborhood since the historical information is discarded when the sampling rate is low.

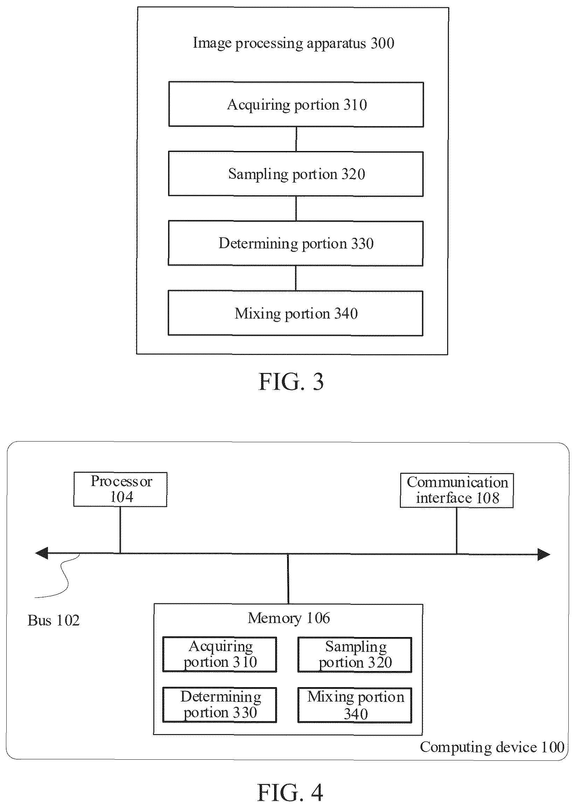

The image processing method provided by the embodiments of the present disclosure has been described above with reference to FIGS. 1 and 2, and the image processing apparatus provided by the embodiments of the present disclosure is described below with reference to FIGS. 3 and 4.

FIG. 3 shows a schematic structural diagram of an image processing apparatus 300 provided by the embodiments of the present disclosure.

As shown in FIG. 3, the image processing apparatus 300 includes an acquiring portion 310, a sampling portion 320, a determining portion 330, and a mixing portion 340.

The acquiring portion 310 is configured to acquire a first image. The first image includes a plurality of pixels, the first pixel is one of the plurality of pixels, and the first color value is a color value of the first pixel.

The sampling portion 320 is configured to determine a second pixel in a second image according to a pixel velocity of the first pixel. The second image is an output image of a frame previous to the first image, the pixel velocity represents a distance and direction of movement of an output position of the first pixel onto a screen relative to an output position of the second pixel onto the screen, and a second color value is a color value of the second pixel.

In some embodiments, the sampling portion 320 is further configured to obtain an effective sample count of the second pixel and a time-domain second moment of the second pixel. The effective sample count represents the number of effective pixels mixed in the second pixel, the time-domain second moment represents a fluctuation range of color values of the effective pixels, and the effective pixels are pixels in historical frames that affect the second color value.

The determining portion 330 is configured to determine a mixing ratio of the first color value to the second color value according to a velocity divergence of the first pixel. The velocity divergence represents a variation in a flux of velocities of pixels within a neighborhood space of the first pixel, the neighborhood space is a square area composed of K × K pixels centered on the first pixel in the first image, and K is an odd number greater than 1.

In some embodiments, the determining portion 330 is further configured to determine an effective range of the second color value according to the velocity divergence. The effective range represents a magnitude of an allowable deviation of the second color value from the first color value. The determining portion 330 is further configured to determine the mixing ratio according to a relationship between the second color value and the effective range.

In some embodiments, in case that the velocity divergence is 0, the determining portion 330 is further configured to determine the effective range according to a spatial standard deviation, a time-domain standard deviation, and the effective sample count of the second pixel. The spatial standard deviation is a standard deviation of color values of pixels in the neighborhood space, the time-domain standard deviation is a standard deviation of color values of the effective pixels, and the time-domain standard deviation is determined according to the time-domain second moment and the second color value of the second pixel.

In some embodiments, in case that the velocity divergence is not 0, the determining portion 330 is further configured to determine the effective range according to a spatial standard deviation. The spatial standard deviation is a standard deviation of color values of pixels within the neighborhood space.

In some embodiments, the determining portion 330 is further configured to adjust the effective range according to the velocity divergence.

In some embodiments, the mixing ratio includes a first mixing ratio and a second mixing ratio. The first mixing ratio is a fixed value, and the second mixing ratio is used to correct the first mixing ratio when the magnitude of the deviation of the second color value from the first color value exceeds the effective range. The determining portion 330 is further configured to determine a second mixing ratio according to the relationship between the second color value and the effective range; and correct the first mixing ratio according to the second mixing ratio to determine the mixing ratio.

In some embodiments, the determining portion 330 is further configured to determine the second mixing ratio of the first pixel according to the second mixing ratios of four surrounding pixels around the first pixel in the first image in case that the weight value of the first pixel is 0. The weight value of the first pixel represents a degree of an effect of a third pixel for generating the first pixel in a third image to the first color value, and the number of pixels of the third image is less than or equal to the number of pixels of the first image.

The mixing portion 340 is configured to determine a third color value according to the mixing ratio. The third color value is an output color value of the first pixel.

In some embodiments, the mixing portion 340 is further configured to: generate an effective sample count of the first pixel according to the effective sample count of the second pixel and the mixing ratio; and generate the time-domain second moment of the first pixel according to the time-domain second moment of the second pixel and the mixing ratio.

The portions of the image processing apparatus 300 may each be implemented by means of software or hardware.

It should be noted that, in other embodiments, the acquiring portion 310, the sampling portion 320, the determining portion 330, and the mixing portion 340 may each be configured to execute any operations in the image processing method described above. The operations implemented by the acquiring portion 310, the sampling portion 320, the determining portion 330, and the mixing portion 340 may be specified as required. The acquiring portion 310, the sampling portion 320, the determining portion 330, and the mixing portion 340 are configured to respectively implement different operations in the above image processing method, to implement all functions of the image processing apparatus.

The embodiments of the present disclosure further provide a computing device 100. As shown in FIG. 4, the computing device 100 includes a bus 102, a processor 104, a memory 106 and a communication interface 108. The processor 104, the memory 106 and the communication interface 108 communicate with each other by means of the bus 102. The computing device 100 may be a server or a terminal device. It should be understood that the number of processors and the number of memories in the computing device 100 are not limited in the embodiments of the present disclosure.

The bus 102 may be a Peripheral Component Interconnect (PCI) bus, an Extended Industry Standard Architecture (EISA) bus, or the like. The bus may be classified into an address bus, a data bus, a control bus, and the like. For ease of representation, only one line is used to represent the bus in FIG. 4, but this does not mean that there is only one bus or only one type of bus. The bus 102 may include a path for transmitting information between various components (for example, the memory 106, the processor 104, and the communication interface 108) of the computing device 100.

The processor 104 may include any one or more of the following processors: a Central Processing Unit (CPU), a Graphics Processing Unit (GPU), a Microprocessor (MP), or a Digital Signal Processor (DSP).

The memory 106 may include a volatile memory, such as a Random Access Memory (RAM). The memory 106 may further include a non-volatile memory, such as a read-only memory, a flash memory, a Hard Disk Drive (HDD), or a Solid-State Drive (SSD).

The memory 106 has executable program codes stored therein, and the processor 104 executes the executable program codes to implement the functions of the acquiring portion 310, the sampling portion 320, the determining portion 330 and the mixing portion 340 described above, respectively, thereby implementing the image processing method described above. That is, the memory 106 has instructions for executing the image processing method described above stored thereon.

A transceiver portion for example but being not limited to a network interface card or a transceiver is used in the communication interface 108, to implement communication between the computing device 100 and another device or a communications network.

The embodiments of the present disclosure provide a chip. The chip is configured to acquire instruction(s) and execute the instruction(s) to implement some or all of the operations in the image processing method described above.

In some embodiments, the chip includes a processor and a data interface. The processor reads, by means of the data interface, an instruction(s) stored on a memory, to execute some or all operations in the image processing method described above.

In some embodiments, the chip may further include a memory. The memory stores an instruction(s). The processor is configured to execute the instruction(s) stored on the memory. When the instruction(s) is executed, the processor is configured to execute some or all operations in the image processing method described above.

The embodiments of the present disclosure further provide a computer program product. The computer program product includes a computer program or an instruction(s). When executed by a processor, the computer program or the instruction(s) implement some or all operations in the image processing method described above.

The embodiments of the present disclosure further provide a computer-readable storage medium having a computer program stored thereon. When executed by a processor, the computer program implements some or all operations in the image processing method described above. The computer-readable storage medium may be any available medium that can be stored by a computing device or a data storage device such as a data center containing one or more available media. The available media may be magnetic media (e.g., floppy disks, hard disks, magnetic tapes), optical media (e.g., Digital Video Discs (DVD)), semiconductor media (e.g., solid state disks), or the like.

The technical features of the above embodiments may be combined in any manner, and for the sake of brevity, not all possible combinations of the technical features in the above embodiments are described. However, as long as there is no conflict in the combinations of these technical features, the combinations should be considered as falling within the scope of disclosure of this specification.

The above embodiments are only used to illustrate the technical solutions of the present disclosure, rather than limiting the technical solutions. Although the present disclosure has been described in detail with reference to the foregoing embodiments, those of ordinary skill in the art should understand that the technical solutions described in the foregoing embodiments may still be modified, or some technical features thereof may be replaced equivalently. These modifications or replacements do not make the essence of the corresponding technical solutions depart from the protection scope of the technical solutions of the embodiments of the present disclosure.

INDUSTRIAL APPLICABILITY

The embodiments of the present disclosure relate to the field of image processing, and provide an image processing method and apparatus, a computing device, and a computer-readable storage medium. The method includes operations as follows. A first image is acquired. A first pixel is one of a plurality of pixels in the first image. A second pixel is determined in a second image according to a pixel velocity of the first pixel. The second image is an output image of a previous frame of the first image. A mixing ratio of a first color value to a second color value is determined according to a velocity divergence of the first pixel. The velocity divergence represents a variation in a flux of velocities of pixels within a neighborhood space of the first pixel. A third color value is determined according to the mixing ratio. The third color value is an output color value of the first pixel. In the method described above, a velocity divergence as a new parameter is introduced as a reference quantity for determining whether historical information of the pixel is available, so that whether the geometric shape around the pixel has changed can be more essentially represented, thereby retaining image details as much as possible, and improving an image output effect.

**Claims**

1.  An image processing method, applied to a computing device, the image processing method comprising:

    acquiring a first image, wherein the first image comprises a plurality of pixels, a first pixel is one of the plurality of pixels, and a first color value is a color value of the first pixel;
    determining a second pixel in a second image according to a pixel velocity of the first pixel, wherein the second image is an output image of a previous frame of the first image, the pixel velocity represents a distance and direction of movement of an output position of the first pixel on a screen relative to an output position of the second pixel on the screen, and a second color value is a color value of the second pixel;
    determining a mixing ratio of the first color value to the second color value according to a velocity divergence of the first pixel, wherein the velocity divergence represents a variation in a flux of velocities of pixels within a neighborhood space of the first pixel, and the neighborhood space is a square area composed of K × K pixels centered on the first pixel in the first image, and K is an odd number greater than 1; and
    determining a third color value according to the mixing ratio, the third color value being an output color value of the first pixel.

2.  The method according to claim **1,** wherein the velocity divergence is related to pixel velocities of edge pixels in the neighborhood space.

3.  The method according to claim 1 or 2, wherein the velocity divergence is calculated according to a number of pixels on each side of the neighborhood space, a side length of pixels in the first image outputted onto the screen, components in an x direction of pixel velocities of edge pixels on a left edge and a right edge of the neighborhood space, and components in a y direction of pixel velocities of edge pixels on an upper edge and a lower edge of the neighborhood space.

4.  The method according to claim 1 or 2, further comprising: before determining the mixing ratio of the first color value to the second color value according to the velocity divergence of the first pixel:
    acquiring an effective sample count of the second pixel and a time-domain second moment of the second pixel, wherein the effective sample count represents a number of effective pixels mixed in the second pixel, the time-domain second moment represents a fluctuation range of color values of the effective pixels, and the effective pixels are pixels in historical frames that affect the second color value.

5.  The method according to claim 4, wherein the determining the mixing ratio of the first color value to the second color value according to the velocity divergence of the first pixel comprises:

    determining an effective range of the second color value according to the velocity divergence, wherein the effective range represents a magnitude of an allowable deviation of the second color value from the first color value; and
    determining the mixing ratio according to a relationship between the second color value and the effective range.

6.  The method according to claim 5, wherein the determining the effective range of the second color value according to the velocity divergence comprises:

in case that the velocity divergence is 0, determining the effective range according to a spatial standard deviation, a time-domain standard deviation, and the effective sample count of the second pixel, wherein the spatial standard deviation is a standard deviation of color values of pixels within the neighborhood space, and the time-domain standard deviation is a standard deviation of color values of the effective pixels.

7. The method according to claim 6, wherein the time-domain standard deviation is calculated according to the time-domain second moment and the second color value of the second pixel.

8. The method according to claim 6 or 7, wherein the effective range is calculated according to the spatial standard deviation, the time-domain standard deviation, and a boundary constraint function.

9. The method according to claim 5, wherein the determining the effective range of the second color value according to the velocity divergence comprises:
   in case that the velocity divergence is not 0, determining the effective range according to a spatial standard deviation, wherein the spatial standard deviation is a standard deviation of color values of pixels within the neighborhood space.

10. The method according to claim 9, wherein the determining the effective range of the second color value according to the velocity divergence further comprises:
    adjusting the effective range according to the velocity divergence.

11. The method according to claim 10, wherein the adjusted effective range is calculated according to the spatial standard deviation, the velocity divergence, and a boundary constraint function.

12. The method according to any one of claims 5 to 7, wherein the mixing ratio comprises a first mixing ratio and a second mixing ratio, the first mixing ratio is a fixed value, and the second mixing ratio is used to correct the first mixing ratio when a magnitude of a deviation of the second color value from the first color value exceeds the effective range, and the determining the mixing ratio according to the relationship between the second color value and the effective range comprises:

    determining the second mixing ratio according to the relationship between the second color value and the effective range; and
    correcting the first mixing ratio according to the second mixing ratio, to determine the mixing ratio.

13. The method according to claim 12, wherein the second mixing ratio is calculated according to the first color value, the second color value, and the effective range.

14. The method according to claim 12, wherein the first image is generated according to a third image, and the number of pixels in the third image is less than or equal to the number of pixels in the first image, wherein the first pixel is generated according to a third pixel in the third image, and a weight value of the first pixel represents a degree of contribution of the third pixel to the first color value, and
    the determining the mixing ratio of the first color value to the second color value according to the velocity divergence of the first pixel further comprises:
    when the weight value of the first pixel is 0, determining the second mixing ratio of the first pixel according to second mixing ratios of four pixels around the first pixel in the first image.

15. The method according to claim 4, further comprising:

    generating an effective sample count of the first pixel according to the effective sample count of the second pixel and the mixing ratio; and
    generating the time-domain second moment of the first pixel according to the time-domain second moment of the second pixel and the mixing ratio.

16. The method according to claim 15, wherein the effective sample count of the first pixel is calculated according to the effective sample count of the second pixel and the mixing ratio, and the time-domain second moment of the first pixel is calculated according to the time-domain second moment of the second pixel and the mixing ratio.

17. An image processing apparatus, comprising:

an acquiring portion configured to acquire a first image, wherein the first image comprises a plurality of pixels, a first pixel is one of the plurality of pixels, and a first color value is a color value of the first pixel;

a sampling portion configured to determine a second pixel in a second image according to a pixel velocity of the first pixel, wherein the second image is an output image of a previous frame of the first image, the pixel velocity represents a distance and direction of movement of an output position of the first pixel on a screen relative to an output position of the second pixel on the screen, and a second color value is a color value of the second pixel;

a determining portion configured to determine a mixing ratio of the first color value to the second color value according to a velocity divergence of the first pixel, wherein the velocity divergence represents a variation in a flux of velocities of pixels within a neighborhood space of the first pixel, and the neighborhood space is a square area composed of $K \times K$ pixels centered on the first pixel in the first image, and K is an odd number greater than 1; and

a mixing portion configured to determine a third color value according to the mixing ratio, the third color value being an output color value of the first pixel.

18. A computing device comprising a processor and a memory having a computer program executable on the processor stored thereon, wherein the computer program, when executed by the processor, implements operations in the method according to any one of claims 1 to 16.

19. A computer-readable storage medium having a computer program stored thereon, wherein the computer program, when executed by a processor, implements operations in the method according to any one of claims 1 to 16.

20. A computer program product comprising a computer program or instructions, wherein the computer program or instructions, when executed by a processor, implements operations in the method according to any one of claims 1 to 16.

21. A chip, configured to acquire instructions and execute the instructions to implement operations in the method according to any one of claims 1 to 16.

Acquire a first image ⎯ S110

Determine a second pixel in a second image according to a pixel velocity of a first pixel ⎯ S120

Determine a mixing ratio of a first color value to a second color value according to a velocity divergence of the first pixel ⎯ S130

Determine a third color value according to the mixing ratio ⎯ S140

FIG. 1

Acquire a first color value and a pixel velocity of a first pixel in a first image, and acquire a second color value, an effective sample count, and a time-domain second moment of a second pixel in a second image according to the pixel velocity ⎯ S210

Calculate a velocity divergence of the first pixel, and determine whether the velocity divergence is 0 ⎯ S220

Yes                    No

Determine a final standard deviation according to a spatial standard deviation, a time-domain standard deviation, and the effective sample count ⎯ S240

The spatial standard deviation is the final standard deviation ⎯ S230

Determine an effective range according to the final standard deviation and the velocity divergence ⎯ S250

Determine a second mixing ratio according to the first color value, the second color value, and the effective range ⎯ S260

Determine whether a weight value of the first pixel is 0 ⎯ S270

Yes                    No

Determine a mixing ratio of the first pixel according to second mixing ratios of four surrounding pixels ⎯ S290

Determine a mixing ratio of the first pixel according to the first mixing ratio, the second mixing ratio, and the weight value of the first pixel ⎯ S280

FIG. 2

Image processing apparatus 300

Acquiring portion 310

Sampling portion 320

Determining portion 330

Mixing portion 340

FIG. 3

Processor 104

Communication interface 108

Bus 102

Memory 106

Acquiring portion 310

Sampling portion 320

Determining portion 330

Mixing portion 340

Computing device 100

FIG. 4

## INTERNATIONAL SEARCH REPORT

| International application No. |
|---|
| **PCT/CN2024/088097** |

**A.    CLASSIFICATION OF SUBJECT MATTER**

H04N7/01(2006.01)i;  H04N5/21(2006.01)i;  G06T5/00(2024.01)n

According to International Patent Classification (IPC) or to both national classification and IPC

**B.    FIELDS SEARCHED**

Minimum documentation searched (classification system followed by classification symbols)

IPC: H04N: G06T

Documentation searched other than minimum documentation to the extent that such documents are included in the fields searched

Electronic data base consulted during the international search (name of data base and, where practicable, search terms used)

CNTXT, ENTXTC, DWPI, ENTXT, CNKI, IEEE: 图像, 图片, 像素, 锯齿, 混叠. 速度. 位移, 运动, 移动, 颜色, 混合, 历史, 上一帧, 前一帧, 边缘, image, pixel, antialias+, AA, TAA, motion, vector, speed. color. colour. mix+, previous, frame, edge

**C.    DOCUMENTS CONSIDERED TO BE RELEVANT**

| Category* | Citation of document, with indication, where appropriate, of the relevant passages | Relevant to claim No. |
|---|---|---|
| PX | CN 116156089 A (MOORE THREADS INTELLIGENT TECHNOLOGY (BEIJING) CO., LTD.) 23 May 2023 (2023-05-23) claims 1-19 | 1-21 |
| A | US 2017272722 A1 (NVIDIA CORP.) 21 September 2017 (2017-09-21) description, paragraphs [0023]-[0097] | 1-21 |
| A | US 2021398253 A1 (NVIDIA CORP.) 23 December 2021 (2021-12-23) entire document | 1-21 |
| A | JP 2010004396 A (SANYO ELECTRIC CO., LTD.) 07 January 2010 (2010-01-07) entire document | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 August 2024** | **05 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088097**

| Patent document cited in search report | | | Publication date (day/month/year) | Patent family member(s) | | | Publication date (day/month/year) |
|---|---|---|---|---|---|---|---|
| CN | 116156089 | A | 23 May 2023 | None | | | |
| US | 2017272722 | A1 | 21 September 2017 | US | 10116916 | B2 | 30 October 2018 |
| | | | | US | 2018343436 | A1 | 29 November 2018 |
| | | | | US | 10362289 | B2 | 23 July 2019 |
| US | 2021398253 | A1 | 23 December 2021 | DE | 102019109757 | A1 | 17 October 2019 |
| JP | 2010004396 | A | 07 January 2010 | JP | 5159461 | B2 | 06 March 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310436358